Europäisches Patentamt

European Patent Office

Office européen des brevets

(11) Veröffentlichungsnummer: **0 189 066**
**B1**

(12) **EUROPÄISCHE PATENTSCHRIFT**

(45) Veröffentlichungstag der Patentschrift: **27.06.90**

(51) Int. Cl.⁵: **C 09 J 7/02, B 32 B 27/32**

(21) Anmeldenummer: **86100253.3**

(22) Anmeldetag: **10.01.86**

(54) **Polypropylen-Klebeband.**

(30) Priorität: **19.01.85 DE 3501726**

(43) Veröffentlichungstag der Anmeldung:
**30.07.86 Patentblatt 86/31**

(45) Bekanntmachung des Hinweises auf die
Patenterteilung:
**27.06.90 Patentblatt 90/26**

(84) Benannte Vertragsstaaten:
**BE DE FR GB IT NL**

(56) Entgegenhaltungen:
**EP-A-0 053 925**
**EP-A-0 093 370**
**DE-A-2 830 536**
**DE-A-3 144 911**
**GB-A-1 416 357**
**GB-A-2 108 008**

(73) Patentinhaber: **HOECHST
AKTIENGESELLSCHAFT
Postfach 80 03 20
D-6230 Frankfurt am Main 80 (DE)**

(72) Erfinder: **Seifried, Walter, Dr.
Am Güldenplan 9
D-6200 Wiesbaden (DE)**
Erfinder: **Crass, Günther
Bachstrasse 7
D-6204 Taunusstein 4 (DE)**

Courier Press, Leamington Spa, England.

**Beschreibung**

Die Erfindung betrifft ein Klebeband aus einer biaxial streckorientierten Polypropylen-Trägerfolie und einer Kleberschicht.

Klebebänder auf der Basis von Kunststoffen sind schon seit langem bekannt. Die am häufigsten eingesetzten Folien bestehen aus Polyvinylchlorid oder Polypropylen. Polypropylenfolien haben für dieses Anwendungsgebiet im Vergleich zu Polyvinylchloridfolien den Vorteil einer besseren Kältefestigkeit, einer höheren thermischen Belastbarkeit, einer niedrigeren Dichte und damit eines niedrigeren Preises pro Flächeneinheit. Nachteilig sind das im Vergleich zu Polyvinylchloridfolien weniger gute Eigenschaftsbild in Längsrichtung, die relativ schlechte Bedruckbarkeit, die Notwendigkeit eines in einem Off-Line-Prozeß aufzutragenden Release Coates und/oder Notwendigkeit des Aufbringens einer haftvermittelnden Schicht für die Kleberschicht des Klebebandes sowie die starken und störenden Abrollgeräusche beim Schneiden der beschichteten Folienbahnen zu Klebebändern und beim Einsatz der Klebebänder.

Zur Beseitigung dieser einzelnen Nachteile von Polypropylenfolien sind in der einschlägigen Patentliteratur bereits verschiedene Möglichkeiten aufgezeigt worden. Die einzelnen Patentanmeldungen und Patente befassen sich jedoch nur mit der Behebung jeweils eines einzigen der genannten Nachteile. So wird in der deutschen Offenlegungsschrift DE—A—31 44 911 ein Klebeband aus einer biaxial gestreckten (orienterten) Polypropylen-Trägerfolie und einer mindestens einseitig aufgebrachten Kleberschicht beschrieben, bei dem aufgrund der Modifizierung der Polypropylen-Trägerfolie mit einem nätürlichen oder synthetischen Harz mit einem Erweichungspunkt von 70 bis 170°C keine haftvermittelnde Schicht für den Klebstoff benötigt wird.

Eine Polypropylenfolie bzw. ein Polypropylen-Klebeband, das keinen der obengenannten Nachteile aufweist, ist noch nicht bekannt.

Der Erinding liegt demnach die Aufgabe zugrunde, eine solche Polypropylenfolie vorzuschlagen, aus der Klebebänder resultieren, die alle wichtigen Forderungen erfüllen. Das durch die Erfindung zur Verfügung gestellte Polypropylen-Klebeband soll insbesondere gute mechanische Eigenschaften und eine gute Bedruckbarkeit aufweisen, keinen Release Coat und auch keine haftvermittelnde Schicht für den Kleber erfordern und ohne die erwähnten störenden Abrollgeräusche verarbeitbar sein.

Das erfindungsgemäße Klebeband aus einer biaxial gestreckten Polypropylen-Trägerfolie und einer Kleberschicht ist dadurch gekennzeichnet, daß die Trägerfolie eine coextrudierte dreischichtige Folie mit einer Basisschicht und zwei Deckschichten ist, wobei die Basisschicht aus Polypropylen, eine der beiden Deckschichten aus einem mit Diorganopolysiloxan modifizierten Polypropylen und die andere Deckschicht, die für die Aufnahme des Klebers vorgesehen ist, aus einem mit einem natürlichen oder synthetischen Harz mit einem Erweichungspunkt von 70 bis 170°C modifizierten Polypropylen besteht, daß die dreischichtige coextrudierte Polypropylenfolie in mindestens drei Stufen biaxial streckorientiert worden ist und daß die für die Aufnahme des Klebers vorgesehene Deckschicht coronabehandelt worden ist.

Die vorgeschalgene Polypropylenfolie besitzt aufgrund der speziellen Kombination von drei ausgewählten Folienschichten, nämlich der Basis- oder Mittelschicht und den zwei auf den beiden Seiten der Basisschicht anliegenden unterschiedlich aufgebauten Deckschichten, sowie aufgrund der besonderen Orientierung der dreischichtigen Folie durch die mindestens dreistufige Streckung ein Eigenschaftsbild, in dem alle wichtigen Vorteile von Polyvinylchloridfolien und alle wichtigen Vorteile von Polypropylenfolien im Hinblick auf die Bereitung von Klebebändern vereint sind. Das auf dieser multifunktionellen Polypropylenfolie basierende Klebeband besitzt gute mechanische Eigenschaften, insbesondere in Längsrichtung, es ist gut und leicht bedruckbar, es ist einfach aufgebaut, da es keinen Release Coat und auch keine haftvermittelnde Schicht für den Kleber hat, und es ist weitgehend geräuschlos verarbeitbar.

Nach einer bevorzugten Ausführungsform besteht die Basisschicht der erfindungsgemäß vorgeschlagenen Trägerfolie aus einem Polypropylen, das mit einem natürlichen oder synthetischen Harz mit einem Erweichungspunkt von 70 bis 170°C modifiziert ist. Die Menge an Modifizierungsharz beträgt im allgemeinen 5 bis 30 Gew.-%, vorzugsweise 10 bis 20 Gew.-%, bezogen auf Polypropylen. Diese Modifizierung trägt zu einer Erhöhung der Steifigkeit des Elastizitätsmoduls bei.

Als diorganopolysiloxanmodifizierte Polypropylen-Deckschicht ist eine solche bevorzugt, die an der Außenseite coronabehandelt worden ist, womit eine noch bessere Bedruckbarkeit erreicht wird. Es ist auch bevorzugt, daß diese Schicht ebenfalls an der Außenseite strukturiert ist, d.h. eine Oberflächenstruktur aufweist, woraus eine weitgehende Verminderung des Abrollgeräusches resultiert. Die diorganopolysiloxanmodifizierte Polypropylen-Deckschicht ist also vorzugsweise coronabehandelt oder strukturiert und insbesondere coronabehandelt und strukturiert.

Die Menge an Diorganopolysiloxan beträgt im allgemeinen 0,3 bis 3 Gew.-%, vorzugsweise 0,5 bis 2 Gew.-%, bezogen auf Polypropylen.

Die für die Kleberschicht vorgesehene Polypropylen-Deckschicht enthält im allgemeinen 10 bis 50 Gew.-%, vorzugsweise 15 bis 40 Gew.-%, Modifizierungsharz, bezogen auf Polypropylen. Durch diese klebstoffaffine Modifizierung und durch die Coronabehandlung dieser Deckschicht an der der Basisschicht abgewandten Seite, das ist die Außenseite, wird eine primerfreie Beschichtbarkeit mit Klebstoff erreicht.

Unter Polypropylen werden Propylenhomopolymere, Propylencopolymere (Blockcopolymere oder statistische Copolymere) oder Mischungen aus Propylenhomopolymeren und/oder Propylencopolymeren verstanden. Der Comonomeranteil in den Copolymeren beträgt im allgemeinen bis zu 20 Gew.-%,

vorzugsweise bis zu 10 Gew.-%, bezogen auf das Copolymere. Geeignete Comonomere sind Ethylen und C$_4$- bis C$_8$-Alphaolefine, vorzugsweise C$_4$- bis C$_6$-Alphaolefine. Als Polypropylen sind demnach Propylenhomopolymere, vorzugsweise isotaktisches Polypropylen, und Propylencopolymere mit Ethylen oder C$_4$- bis C$_6$-Alphaolefinen, vorzugsweise Butylen, also Comonomere in einer Menge von bis zu 10 Gew.-%, bezogen auf das Copolymere, bevorzugt.

Bei den zur Modifizerung des Polypropylens zugegebenen natürlichen oder synthetischen Harzen mit einem Erweichungspunkt von 70 bis 170°C, vorzugsweise 80 bis 140°C, (bestimmt nach DIN 1995-U4) handelt es sich um die bekannten sogenannten harten Harze. Dazu zählen die Kohlenwasserstoffharze wie Cumaronharze, Erdölharze und Terpenharze, Ketonharze, Polyamidharze, Aldehydharze wie Xylol-Formaldehydharze und Naphthalin-Formaldehydharze, Dammarharze und Kolophonium.

Cumaronharze werden meist durch Polymerisation von entphenolten und entbasten Fraktionen des Steinkohlenteer-Leichtöls gewonnen, die beispielsweise Inden, Styrol, Dicyclopentadien, Cumaron und deren Homologe als ungesättigte Verbindungen enthalten. Durch Copolymerisation, beispielsweise mit Phenol, ist eine vielseitige Modifikation möglich.

Die Rohstoffbasis der Erdölharze wird bei der Krackung von Naphtha- oder Gasöl auf Rohstoffe der chemischen Industrie wie Ethylen und Propylen gewonnen. Es handelt sich beispielsweise um harzbildende Verbindungen wie Buten, Butadien, Penten, Piperylen, Isopren, Cyclopentadien, Dicyclopentadien, Alkylbenzole, Methyldicyclopentadien, Methylinden, Naphthalin, Styrol, Inden, Vinyltoluol und Methylstyrol.

Bei Terpenharzen handelt es sich um Polymerisate von Terpenen. Als Beispiele für geeignete Terpene seien β-Pinen, Dipenten, Limonen, Myrcen, Bornylen, Camphen und ähnliche Terpene genannt.

Die Kohlenwasserstoffharze können beispielsweise durch Reaktion der Rohstoffe vor der Polymerisation, durch Einführung spezieller Monomerer oder durch Reaktion des polymerisierten Produktes modifiziert werden. Eine bevorzugte Modifizierungsart ist die Hydrierung oder Teilhydrierung ungesättigter Bestandteile der Harze.

Dammarharze werden durch Lebendharzung von Bäumen der Familie Dipterocarpacaee gewonnen.

Kolophonium ist ein natürliches Harz, das aus dem Rohlbalsam der Koniferen (Balsamharz), dem Extrakt der Koniferenstubben (Wurzelharz) oder aus Tallöl (Tallharz) gewonnen wird und im wesentlichen aus Abietinsäure und deren Isomeren besteht. Es kann sich auch um modifiziertes Kolophonium handeln, das durch Polymerisieren, Hydrieren, Dehydrieren, Oxidieren, Decarboxilieren, Verseifen, Verester, Isomerisieren oder Disproportionieren von Kolophonium entsteht.

Bevorzugte Harze mit einem Erweichungspunkt von 70 bis 170°C, vorzugsweise 80 bis 140°C, sind Styrolpolymerisate, α-Methylstyrol-Styrolcopolymerisate, α-Methylstyrol-Vinyltoluol-Copolymerisate, Pentadienpolymerisate, α-Pinen- oder β-Pinen-Polymerisate, Terpenpolymerisate, Kolophonium und modifiziertes Kolophonium.

Als Diorganopolysiloxane oder Polydiorganosiloxane werden vorzugsweise solche eingesetzt, die bei 25°C eine Viskosität von mindestens 100 mm$^2$/s, vorzugsweise 1 000 bis 30 000 mm$^2$/s, aufweisen. Beispiel für geeignete Polydiorganosiloxane sind Polydialkylsiloxane, Polyalkylphenylsiloxane mit etwa 30 bis 70% Alkylgruppe und 30 bis 70% Phenylgruppen, olefinmodifizierte Siloxanöle, polyethermodifizierte Siliconöle, olefin/polyethermodifizierte Siliconöle, epoxymodifizierte Siliconöle und alkoholmodifizierte Siliconöle, worunter Polydialkylsiloxane mit C$_1$ bis C$_4$ in der Alkylgruppe wie Polydimethylsiloxan und Polyalkylphenylsiloxane mit C$_1$ bis C$_4$ in der Alkylgruppe wie Polymethylphenylsiloxan bevorzugt sind. Polymethylphenylsiloxan ist besonders bevorzugt.

Die einzelnen Schichten der erfindungsgemäß vorgeschlagenen dreischichtigen Polypropylenfolie können neben Polypropylen und den genannten Modifizerungsmitteln auch noch zweckmäßige Additive wie Gleitmittel, Antistatika, Stabilisatoren und dergleichen enthalten.

Die Herstellung der erfindungsgemäß vorgeschlagenen dreischichtigen Polypropylenfolie erfolgt nach dem bekannten Coextrusionsverfahren. Im Rahmen dieses Verfahrens wird so vorgegangen, daß die den einzelnen Schichten der Folie entsprechenden Schmelzen durch eine Flachdüse coextrudiert werden, die durch Coextrusion erhaltene Folie zur Verfestigung abgekühlt wird, die Folie in mindestens drei Stufen, vorzugsweise dreistufig biaxial streckorientiert und die biaxial streckorientierte Folie thermofixiert wird. Die dreistufige Streckorientierung wird vorzugsweise in der Reihenfolge längs-quer-längs, längs-längs-quer, längs-simultan (längs/quer) oder simultan (längs/quer)-längs durchgeführt. Besonders bevorzugt ist die Reihenfolge längs-quer-längs (in jeder Stufe kann also eine Streckung allein durchgeführt werden, es ist auch möglich, zwei der Stufen, nämlich die Längs- und Querstreckung, simultan durchzuführen).

Zunächst wird also wie beim üblichen Coextrusionsverfahren das Polymere oder die Polymermischung der einzelnen Schichten in einem Extruder komprimiert und verflüssigt. Die Schmelzen werden dann gleichzeitig durch eine Flachdüse (Breitschlitzdüse) gepreßt, und die augepreßte mehrschichtige Folie wird auf einer oder mehreren Walzen, die durch Kühlung auf etwa 30 bis 50°C gehalten werden, abgekühlt und verfestigt. Die so erhaltene Folie wird dann bei einer Temperatur unterhalb des Schmelzpunktes des eingesetzten Polymeren in mindestens drei Stufen, vorzugsweise dreistufig, längs und quer zur Extrusionsrichtung gestreckt, was zu einer Orientierung der Molekülketten führt. Das Verhältnis (Gesamtverhältnis) der Streckung beträgt in Längsrichtung vorzugsweise 8 bis 12:1 und in Querrichtung vorzugsweise 8 bis 10:1. Bei der ersten Längsstreckung wird ein höheres Längsstreckverhältnis genommen als bei der zweiten und den gegebenenfalls weiteren Längsstreckungen;

3

es liegt im Bereich von vorzugsweise 5 bis 7:1. Es ist bevorzugt, daß die Temperatur der Folie bei der ersten Längsstreckung bis zu 20°C unterhalb der Temperatur liegt, bei welcher üblicherweise eine klare Folie aus dem gleichen Material gestreckt wird. Die erste Längsstreckung wird demnach vorzugsweise bei einer Folientemperatur von 120 bis 130°C durchgeführt, die weiteren Längsstrekungen und die Querstreckungen werden vorzugsweise bei einer Folientemperatur von 160 bis 170°C durchgeführt. Das Längsstrecken wird man zweckmäßigerweise mit Hilfe zweier Entsprechend dem angestrebten Streckverhältnis verschieden schnell laufender Walzen durchführen und das Querstrecken mit Hilfe eines entsprechenden Kluppenrahmens. An die mehrstufige biaxiale Streckung der Folie schließt sich ihre Thermofixierung (Wärmebehandlung) an. Dabei wird die Folie etwa 0,5 bis 10 s lang, vorzugsweise 1 bis 5 s lang, bei einer Temperatur von 150 bis 160°C gehalten. Die thermofixierte Folie wird in üblicher Weise durch Führen über Kühlwalzen abgekühlt und mit Hilfe einer Aufwickeleinrichtung aufgewickelt.

Durch die beschriebene mehrstufige Streckorientierung werden hervorrangende mechanische Eigenschaften, insbesondere hohe Werte des Elastizitätsmodulis in Längsrichtung, erreicht, was im Hinblick auf die Herstellung von Klebebändern besonders vorteilhaft ist.

Zur Coronabehandlung, die nach einer der bekannten Methoden durchgeführt werden kann, wird zweckmäßigerweise so vorgegangen, daß die Folie zwischen zwei als Elektroden dienenden Leiterelementen hindurchgeführt wird, wobei zwischen den Elektroden eine so hohe Spannung, meist Wechselspannung, angelegt ist, daß Sprüh- oder Coronaentladungen stattfinden können. Durch diese Sprüh- oder Coronaentladungen wird die Luft oberhalb der Folienoberfläche ionisiert und verbindet sich mit den Molekülen auf der Folienoberflächen, so daß polare Einlagerungen in der im wesentlichen unpolaren Polymermatrix entstehen. Die erfindungsgemäß vorgeschlagene Polypropylen-Trägerfolie ist mindestens einseitig coronabehandelt, und zwar auf der Außenseite derjenigen Deckschicht, die für die Klebstoffaufnahme vorgesehen ist. Nach einer bevorzugten Ausführungsform sind beide Deckschichten (an deren Außenseiten) coronabehandelt.

Auch die Strukturierung (Aufrauhung) der dreischichtigen Polypropylenfolie kann nach einer der bekannten Methoden durchgeführt werden. Im Rahmen des oben beschriebenen Herstellungsverfahrens wird man die gewünschte Aufrauhung über die β-α-Kristallitumwandlung erzeugen. Dazu hält man die Abzugswalze (Kühlwalze) auf einer Temperatur, die hoch genug ist, um in der aufzurauhenden Schicht β-Kristallite zu erzeugen. Diese Temperatur liegt bei 70 bis 110°C, vorzugsweise 90 bis 100°C. Die Umwandlung der β-Kristallite in α-Kristallite geht während der Aufheizung der Folie auf die Strecktemperatur und während der Streckung vor sich, da die β-Kristallite bei dieser Temperatur nicht stabil sind. Eine Verstärkung der Aufrauhung kann dadurch erreicht werden, daß die (in Folienlaufrichtung) erste Walze des Streckwalzenpaares eine strukturierte (sandgestrahlte) Walze ist. Im allgemeinen wird eine derart rauhe Folienoberfläche angestrebt, daß der Wert der gemittelten Rauhtiefe $R_z$ (vgl. DIN 4768) 1 bis 8 µm, vorzugsweise 2 bis 5 µm, beträgt.

Was die Dicke der erfindungsgemäß vorgeschlagenen Polypropylen-Trägerfolie betrifft, hat es sich im Hinblick auf die Bereitung von Klebebändern als vorteilhaft herausgestellt, daß die Gesamtdicke der dreischichtigen Folie 10 bis 50 µm, vorzugsweise 20 bis 40 µm, beträgt, wobei die Deckschichten jeweils vorzugsweise 1 bis 5 µm dick sind.

Zur Klebbstoffbeschichtung der erfindungsgemäß vorgeschlagenen Polypropylen-Trägerfolie und damit zur Bereitung des erfindungsgemäßen Klebebandes kommen die für Polypropylen- und Polyvinylchlorid-Folien bekannten und üblichen Klebstoffe in Betracht. Auch die Beschichtung selbst wird nach einer der bekannten Methoden durchgeführt. Bei der vorliegenden Polypropylen-Trägerfolie haben sich als Klebstoff die bekannten Kautschuk- und Acrylatkleber als besonders geeignet erwiesen.

Das erfindungsgemäße Klebeband weist alle jene entscheidenden Eigenschaften auf, die derzeit an Klebebänder gestellt werden. Es besitzt gute mechanische Werte, insbesondere einen hohen Elastizitätsmodul in Längsrichtung, es ist gut und leicht bedruckbar, es hat keinen Release Coat und ist trotzdem gut trennbar (abrollbar), es hat keine haftvermittelnde Schicht für den Klebstoff, und dieser haftet trotzdem so gut auf der Schicht, daß er beim Abrollen nicht abgerissen wird, und es erzeugt kein nennenswertes Abrollgeräusch. Das erfindungsgemäße Klebeband kann aufgrund der hervorrangenden Eigenschaften, die aus dem multifunktionellen Aufbau der Polypropylen-Trägerfolie resultieren, auch bei speziellen Verpackungsmethoden eingesetzt werden.

Die Erfindung wird nun an Beispielen nach näher erläutert.

Beispiel 1

Mit Hilfe des Coextrusionsverfahrens wurde bei einer Extrusionstemperatur von etwa 260°C aus einer Breitschlitzdüse eine dreischichtige Polypropylenfolie mit einer Basisschicht und zwei Deckschichten extrudiert, wobei die Schmelze für die Basisschicht aus einem Propylen-Homopolymeren und 10 Gew.-%, bezogen auf das Polypropylen, von dem synthetischen Harz α-Methylstyrol-Styrolcopolymerisat mit einem Erweichungspunkt von 100°C, die Schmelze der einen der beiden Deckschichten aus einem Propylen-Homopolymeren und 0,5 Gew.-%, bezogen auf das Polypropylen, Polymethylphenylsiloxan mit einer kinematischen Viskosität von 1000 mm²/s bei 25°C und die Schmelze der anderen Deckschicht aus einem Propylenhomopolymeren und 15 Gew.-%, bezogen auf das Polypropylen, von dem genannten synthetischen Harz bestand (das Propylenhomopolymere war jeweils ein isotaktisches Polypropylen). Die auf der Abzugswalze verfestigte Folie wurde in einem Heizkanal auf Strecktemperatur gebracht und

4

zunächst bei 125°C um den Faktor 5 längsgestreckt, anschließend bei 165°C um den Faktor 9 quergestreckt und nach der Querstreckung nochmals längsgestreckt um den Faktor 2 bei der Folientemperatur von 165°C. Die nachfolgende Thermofixierung erfolgte bei 160°C 5 s lang. Zur Erzeugung von β-Kristalliten in der polysiloxanmodifizierten Polypropylen-Deckschicht im Hinblick auf eine Aufrauhung dieser Schicht auf einen $R_z$-Wert von 2 µm (Wert der gemittelten Rauhtiefe nach DIN 4768) wurde bei Abzugswalze oder Kühlwalze (deren Temperatur normalerweise 30 bis 50°C ist) auf einer Temperatur von etwa 95°C gehalten. Im anschließenden Streckprozeß ging die Umwandlung der β-Kristallite in α-Kristallite vor sich und damit die Aufrauhung der Oberfläche der Schicht auf den angestrebten $R_z$-Wert. Die Folie wurde beidseitig coronabehandelt, und zwar bei einer Primärspannung von 200 V und 0,5 A Stromstärke. Die dreischichtige Polypropylenfolie war 30 µm dick, wobei die Dicke der Basischicht 26 µm und die Dicke der Deckschichten jeweils 2 µm betrug.

Beispiele 2 bis 4

Es wurde jeweils wie bei Beispiel 1 vorgegangen, wobei sich jedoch die Schmelzen von denen des Beispiels 1 durch die nachstehend angegebenen Merkmale unterschieden:

|  | Beispiel 2 | Beispiel 3 | Beispiel 4 |
|---|---|---|---|
| Basisschicht | 20% Harz | ohne Harz | 30% Harz |
| Deckschicht 1 | 2% Polysiloxan | 0,3% Polysiloxan | 3% Polysiloxan |
| Deckschicht 2 | 30% Harz | 10% Harz | 40% Harz |

In den Beispielen 2 und 4 wurde im Unterschied zu Beispiel 1 als Harz ein synthetisches Polyterphenharz mit einem Erweichungspunkt von 125°C und als Polysiloxan Polydimethylsiloxan mit einer kinematischen Viskosität von 30000 mm²/s bei 25°C eingesetzt.

Zur Bereitung eines Klebebandes wurden die Polypropylenfolien der Beispiele 1 bis 4 mit einem Kleber auf Acrylatbasis beschichtet.

Die so erhaltenen Klebebänder wurden bezüglich Elastizitätsmodul in Längsrichtung (Längs-E-Modul) nach DIN 53 457, bezüglich Bedruckbarkeit, Trennbarkeit (Abrollbarkeit), Haftung bei primerfreien Acrylat-Beschichtung und bezüglich Abrollgeräusch geprüft.

Die Ergebnisse sind in der nachstehenden Tabelle zusammengefaßt:

TABELLE

| Beispiele | Längs-E-Modul (N/mm²) | Bedruck-barkeit | Trenn-barkeit | Klebstoff-haftung | Abroll-geräusch |
|---|---|---|---|---|---|
| 1 | 4250 | sehr gut | sehr gut | gut | sehr leise |
| 2 | 4800 | sehr gut | sehr gut | sehr gut | sehr leise |
| 3 | 3000 | sehr gut | befriedigend | befriedigend | moderat |
| 4 | 4920 | gut | sehr gut | sehr gut | sehr leise |

## Patentansprüche

1. Klebeband aus einer biaxial streckorientierten Polypropylen-Trägerfolie und einer Kleberschicht, dadurch gekennzeichnet, daß die Trägerfolie eine coextrudierte dreischichtige Folie mit einer Basisschicht und zwei Deckschichten ist, wobei die Basisschicht aus Polypropylen, eine der beiden Deckschichten aus einem mit Diorganopolysiloxan modifizierten Polypropylen und die andere Deckschicht, die für die Aufnahme des Klebers vorgesehen ist, aus einem mit einem natürlichen oder synthetischen Harz mit einem Erweichungspunkt von 70 bis 170°C modifizerten Polypropylen besteht, daß die dreischichtige coextrudierte Polypropylenfolie in mindestens drei Stufen biaxial streckorientiert worden ist und daß die für die Aufnahme des Klebers vorgesehene Deckschicht coronabehandelt worden ist.

2. Klebeband nach Anspruch 1, dadurch gekennzeichnet, daß die Basisschicht aus einem mit einem natürichen oder synthetischen Harz mit einem Erweichungspunkt von 70 bsi 170°C modifizierten Polypropylen besteht.

3. Klebeband nach Anspruch 2, dadurch gekennzeichnet, daß die Menge an Harz 5 bis 30 Gew.-%, bezogen auf das Polypropylen, beträgt.

4. Klebeband nach einem oder mehreren der Ansprüche 1 bis 3, dadurch gekennzeichnet, daß die Menge an Diorganopolysiloxan in der diorganopolysiloxanmodifizierten Polypropylen-Deckschicht 0,3 bis 3,0 Gew.-%, bezogen auf das Polypropylen, beträgt.

5. Klebeband nach einem oder mehreren der Ansprüche 1 bis 4, dadurch gekennzeichnet, daß die diorganopolysiloxanmodifizierte Polypropylen-Deckschicht coronabehandelt worden ist und eine strukturierte Oberfläche aufweist.

6. Klebeband nach einem oder mehreren der Ansprüche 1 bis 5, dadurch gekennzeichnet, daß die Menge an Harz in der harzmodifizierten Polypropylen-Deckschicht 10 bis 50 Gew.-%, bezogen auf das Polypropylen, beträgt.

7. Klebeband nach einem oder mehreren der Ansprüche 1 bis 6, dadurch gekennzeichnet, daß die biaxiale Streckorientierung dreistufig durchgeführt worden ist, wobei zunächst in Längsrichtung, dann in Querrichtung und anschließend wieder in Längsrichtung gestreckt worden ist mit einem Längsstreckverhältnis von insgesamt 8 bis 12:1 und einem Querstreckverhältnis von 8 bis 10:1.

8. Klebeband nach einem oder mehreren der Ansrüche 1 bis 7, dadurch gekennzeichnet, daß die Trägerfolie eine Dicke von 10 bis 50 µm besitzt, wobei die Dicke der beiden Deckschichten jeweils 1 bis 5 µm beträgt.

9. Klebeband nach einem oder mehreren der Ansprüche 1 bis 8, dadurch gekennzeichnet, daß die Kleberschicht aus einem Kautschuk- oder Acrylatkleber gebildet ist.

**Revendications**

1. Ruban adhésif constitué d'une pellicule de support à base de polypropylène orientée biaxialement par étirage et d'une couche d'adhésif, caractérisé en ce que la pellicule de support est une pellicule à trois couches coextrudée, comportant une couche de base et deux couches de recouvrement, la couche de base étant constituée de polypropylène, l'une des deux couches de recouvrement étant constituée d'un polypropylène modifié par un diorganopolysiloxane, et l'autre couche et recouvrement, qui est destinée à recevoir l'adhésif, étant constituée d'un polypropylène modifié par une résine naturelle ou synthétique ayant un point de ramollissement de 70 à 170°C, en ce que la pellicule à base de polypropylène à trois couches coextrudée a été orientée biaxialement par étirage en au moins trois étapes, et en ce que la couche de recouvrement destinée à recevoir l'adhésif a été traitée par effet couronne.

2. Ruban adhésif selon la revendication 1, caractérisé en ce que la couche de base est constituée d'un polypropylène modifié par une résine naturelle ou synthétique ayant un point de ramollissement de 70 à 170°C.

3. Ruban adhésif selon la revendication 2, caractérisé en ce que la quantité de résine va de 5 à 30% en poids, par rapport au polypropylène.

4. Ruban adhésif selon une ou plusieurs des revendications 1 à 3, caractérisé en ce que la quantité de diorganopolysiloxane dans la couche de recouvrement à base de polypropylène modifié par un diorganopolysiloxane va de 0,3 à 3,0% en poids, par rapport au polypropylène.

5. Ruban adhésif selon une ou plusieurs des revendications 1 à 4, caractérisé en ce que la couche de recouvrement à base de polypropylène, modifié par un diorganopolysiloxane, a été traitée par effet couronne et présente une surface texturée.

6. Ruban adhésif selon une ou plusieurs des revendications 1 à 5, caractérisé en ce que la quantité de résine dans la couche de recouvrement, à base de polypropylène modifié par une résine, va de 10 à 50% en poids, par rapport au polypropylène.

7. Ruban adhésif selon une ou plusieurs des revendications 1 à 6, caractérisé en ce que l'orientation biaxiale par étirage a été effectuée en trois étapes, la feuille ayant été étirée d'abord dans le sens longitudinal, puis dans le sens transversal et ensuite à nouveau dans le sens longitudinal, avec un rapport d'étirage longitudinal de 8:1 à 12:1 au total et un rapport d'étirage dans le sens transversal de 8:1 à 10:1.

8. Ruban adhésif selon une ou plusieurs des revendications 1 à 7, caractérisé en ce que la pellicule de support présente une épaisseur de 10 à 50 µm, les deux couches de recouvrement ayant chacune une épaisseur de 1 à 5 µm.

9. Ruban adhésif selon une ou plusieurs des revendications 1 à 8, caractérisé en ce que la couche d'adhésif est constituée d'un adhésif de type caoutchouc ou acrylate.

**Claims**

1. An adhesive tape comprised of a biaxially stretch-oriented polypropylene base film and an adhesive layer, wherein the base film is a co-extruded, three-layer film comprising a base layer and two covering layers, the base layer being composed of polypropylene, one of the two covering layers being composed of polypropylene modified with a diorganopolysiloxane and the other covering layer, which is intended for the reception of the adhesive, being composed of polypropylene modified with a natural or synthetic resin having a softening point of 70 to 170°C, the three-layer, co-extruded polypropylene film has been axially stretch-oriented in at least three stages, and the covering layer intended for the reception of the adhesive has been subjected to corona treatment.

2. The adhesive tape as claimed in claim 1, wherein the base layer is composed of polypropylene modified with a natural or synthetic resin having a softening point of 70 to 170°C.

3. The adhesive tape as claimed in claim 2, wherein the amount of resin is 5 to 30% by weight, relative to the polypropylene.

4. The adhesive tape as claimed in one or several of claims 1 to 3, wherein the amount of diorganopolysiloxane in the polypropylene covering layer modified with diorganopolysiloxane is 0.3 to 3.0% by weight, relative to the polypropylene.

5. The adhesive tape as claimed in one or several of claims 1 to 4, wherein the polypropylene covering layer modified with diorganopolysiloxane has been subjected to corona treatment and has a texturized surface.

6. The adhesive tape as claimed in one or several of claims 1 to 5, wherein the amount of resin in the resin-modified polypropylene covering layer is 10 to 50% by weight, relative to the polypropylene.

7. The adhesive tape as claimed in one or several of claims 1 to 6, wherein the biaxial stretch-orientation has been carried out in three stages, stretching having been carried out first in the longitudinal direction, then in the transverse direction and subsequently again in the longitudinal direction, using a longitudinal stretching ratio of altogether (8 to 12):1 and a transverse stretching ratio of (8 to 10):1.

8. The adhesive tape as claimed in one or several of claims 1 to 7, wherein the base film has a thickness of 10 to 50 μm, the thickness of each of the two covering layers being 1 to 5 μm.

9. The adhesive tape as claimed in one or several of claims 1 to 8, wherein the adhesive layer is composed of a rubber or acrylate adhesive.